Europäisches Patentamt

European Patent Office

Office européen des brevets

(19)

(11) Numéro de publication: **0 314 562**
**A1**

## (12) DEMANDE DE BREVET EUROPEEN

(21) Numéro de dépôt: 88402685.7

(22) Date de dépôt: 25.10.88

(51) Int. Cl.⁴: **A 01 K 41/00**

(30) Priorité: 27.10.87 FR 8714846

(43) Date de publication de la demande:
03.05.89 Bulletin 89/18

(84) Etats contractants désignés:
AT BE CH DE ES GB GR IT LI LU NL SE

(71) Demandeur: **ELEVAGE AVICOLE DE LA BOHARDIERE S.A.R.L.**
**Saint-Laurent-de-la-Plaine**
**F-49290 Chalonnes-sur-Loire (FR)**

(72) Inventeur: **Dambre, Pierre ELEVAGE AVICOLE DE LA BOHARDIERE S.A.R.L. Saint-Laurent-de-la-Plaine**
**F-49290 Chalonnes-sur-Loire (FR)**

(74) Mandataire: **Ahner, Francis et al**
**CABINET REGIMBEAU 26, avenue Kléber**
**F-75116 Paris (FR)**

(54) Groupe de ventilation pour une enceinte d'incubation d'oeufs ou une enceinte d'éclosoir.

(57) L'invention concerne un groupe de ventilation (10) pour une enceinte d'incubation d'oeufs ou une enceinte d'éclosoir, dans lequel un ventilateur centrifuge crée, par effet de dépression, un flux d'air dans des casiers de stockage d'oeufs disposés à proximité du ventilateur.

Selon l'invention, le ventilateur centrifuge comprend deux turbines (20) montées sur un axe horizontal et disposées sensiblement au centre de l'enceinte, avec les casiers (2) placés de part et d'autre des turbines, chacune des turbines étant constituée d'une virole creuse centrale (21) garnie d'aubes (22) à sa périphérie.

Avantageusement, l'air frais et l'air recyclé sont climatisés par humidification (42), réchauffage (30) ou refroidissement (41,51) éventuels, dans la zone centrale (11) comprise entre les viroles centrales distantes des deux turbines, avant tout contact avec les oeufs à couver.

FIG.1

FIG.2

EP 0 314 562 A1

**Description**

## GROUPE DE VENTILATION POUR UNE ENCEINTE D'INCUBATION D'OEUFS OU UNE ENCEINTE D'ECLOSOIR

La présente invention concerne un groupe de ventilation pour une enceinte d'incubation d'oeufs ou une enceinte d'éclosoir.

Plus précisément, elle concerne un tel groupe de ventilation dans lequel un ventilateur centrifuge crée, par effet de dépression, un flux d'air dans des casiers de stockage d'oeufs disposés à proximité du ventilateur.

De nombreux types de groupes de ventilation ont été proposés, ainsi que de nombreuses configurations groupe de ventilation/casiers de stockage des oeufs, utilisant un ventilateur unique avec une optimisation de la circulation d'air dans l'incubateur, ou bien une pluralité de ventilateurs répartis en différents points de l'enceinte.

L'un des buts de la présente invention est de proposer un groupe de ventilation du type précité qui permette d'optimiser la régulation de la température et de l'hygrométrie de l'enceinte avec la plus grande homogénéité possible à l'intérieur de celle-ci, avec un rendement élevé de la ventilation permettant, à puissance égale, d'accentuer et de répartir au mieux l'effet de dépression dans les casiers de stockage des oeufs.

A cet effet, selon l'invention, le ventilateur centrifuge comprend deux turbines montées sur un axe horizontal et disposées sensiblement au centre de l'enceinte, avec les casiers placés de part et d'autre des turbines, chacune des turbines étant constituée d'une virole creuse centrale garnie d'aubes à sa périphérie.

Ainsi, grace à la configuration de l'invention, on provoque une circulation d'air intense à l'intérieur de la zone de climatisation comprise entre les deux turbines.

Selon un certain nombre de caractéristiques avantageuses de l'invention :

- l'air frais et l'air recyclé sont climatisés par humidification, réchauffage ou refroidissement éventuels, dans la zone centrale comprise entre les viroles centrales distantes des deux turbines, et ce avant tout contact avec les oeufs à couver ;

- les aubes ont, en section droite, un forme présentant une âme centrale pourvue d'extrémités en forme de V ; dans ce cas, de préférence, la forme de la section droite des aubes est une forme symétrique de part et d'autre du plan central de l'aube passant par l'axe de la turbine, de manière à autoriser un fonctionnement dans les deux sens de cette dernière, le V de l'extrémité intérieure est de plus grande dimension que celle du V de l'extrémité extérieure et présente un angle d'ouverture supérieur à celui du V de l'extrémité extérieure ;

- les aubes présentent une inclinaison par rapport à la direction radiale, cette inclinaison des aubes par rapport à la direction radiale étant comprise entre 10 et 20° ;

- le diamètre de la virole centrale est compris entre 25 et 60 % du diamètre hors tout de la turbine ;

- la largeur en direction axiale de la virole centrale est comprise entre 25 et 60 % du diamètre de celle-ci ;

et

- l'écartement en direction axiale entre les deux turbines est compris entre 10 et 30 % du diamètre hors tout de celles-ci.

D'autres caractéristiques et avantages de la présente invention apparaîtront à la lecture de la description détaillée ci-dessous, faite en référence aux dessins annexés sur lesquels :

- la figure 1 est une vue schématique, en plan, d'une enceinte d'incubation d'oeufs ou d'une enceinte d'éclosoir utilisant le groupe de ventilation de la présente invention,

- la figure 2 est une vue agrandie, en élévation, de ce groupe de ventilation,

- la figure 3 est une coupe de l'aube de ventilateur, prise selon les lignes A-A et B-B des figures 2 ou 4, et

- la figure 4 est une vue de face de l'une des turbines de la figure 2.

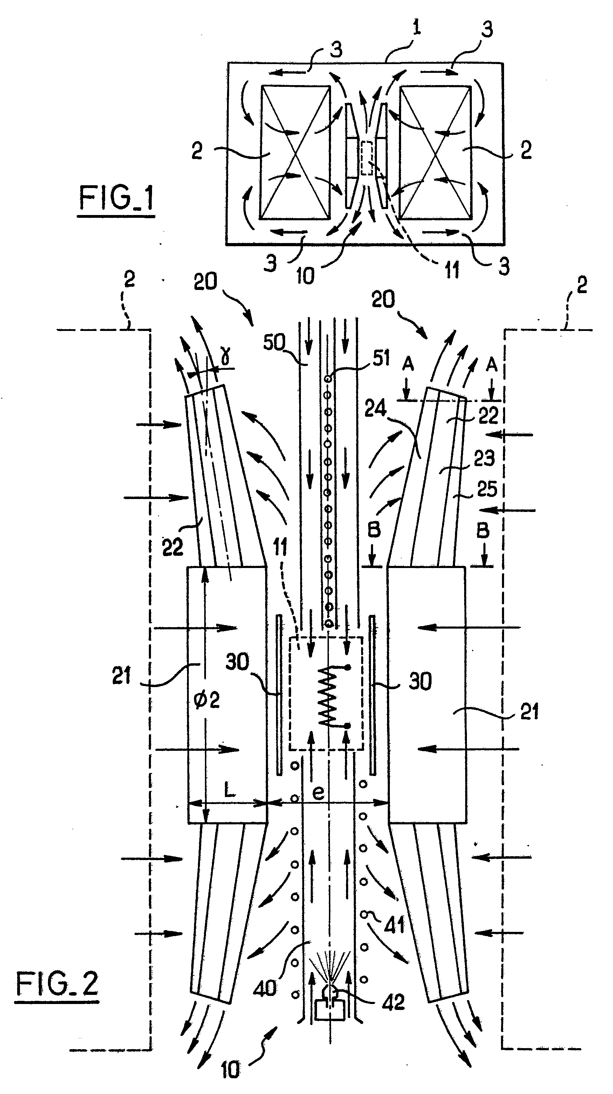

Sur la figure 1, la référence 1 désigne l'enceinte d'incubation ou l'enceinte d'éclosoir, dans laquelle la masse des oeufs à couver est installée dans des casiers d'oeufs répartis de part et d'autre du groupe de ventilation 10, placé en position centrale dans l'enceinte.

Le groupe de ventilation crée, par effet centrifuge, un flux d'air par aspiration axiale et refoulement radial : l'air enveloppant les casiers d'oeufs est ainsi aspiré par dépression à travers tous les casiers et refoulé vers l'extérieur en direction de la paroi de l'enceinte 1, la circulation de l'air se refermant par un passage d'air 3 que l'on laisse subsister entre les casiers 2 et la paroi de l'enceinte 1, et suffisant pour permettre cette circulation.

Outre la création d'un flux d'air circulant, le groupe de ventilation assure l'admission d'air frais dans l'enceinte, le réchauffage ou le refroidissement de l'air ainsi que son humidification ; comme on le décrira par la suite, ces différentes fonctions sont opérées dans une chambre de climatisation 11 au centre du groupe de ventilation 10, ce qui permet d'homogénéiser au mieux humidité et température, du fait que la climatisation est réalisée à l'endroit même où le brassage de l'air est le plus important et avant qu'il soit en contact avec la masse des oeufs à couver.

La figure 2 montre plus en détail le groupe de ventilation 10 : celui-ci comprend essentiellement deux turbines 20 placées en vis en vis avec leur axe de rotation horizontal, ces turbines étant constituées d'une virole centrale 21 de grand diamètre portant à sa périphérie une pluralité de pales ou aubes 22 permettant de réaliser, de manière connue, l'effet centrifuge de la turbine.

Chacune de ces aubes, qui sont toutes identiques, présente un profil en section droite homothétique sur toute leur longueur, ce profil étant constitué, comme on peut le voir plus en détail sur la figure 2, d'une âme centrale 23 terminée par des V d'extrémités 24 et 25.

Cette structure permet d'assurer l'effet centrifuge désiré par aspiration de l'air par les deux V 24 et 25 de chaque aube, puis refoulement à l'extérieur par l'âme plate 23.

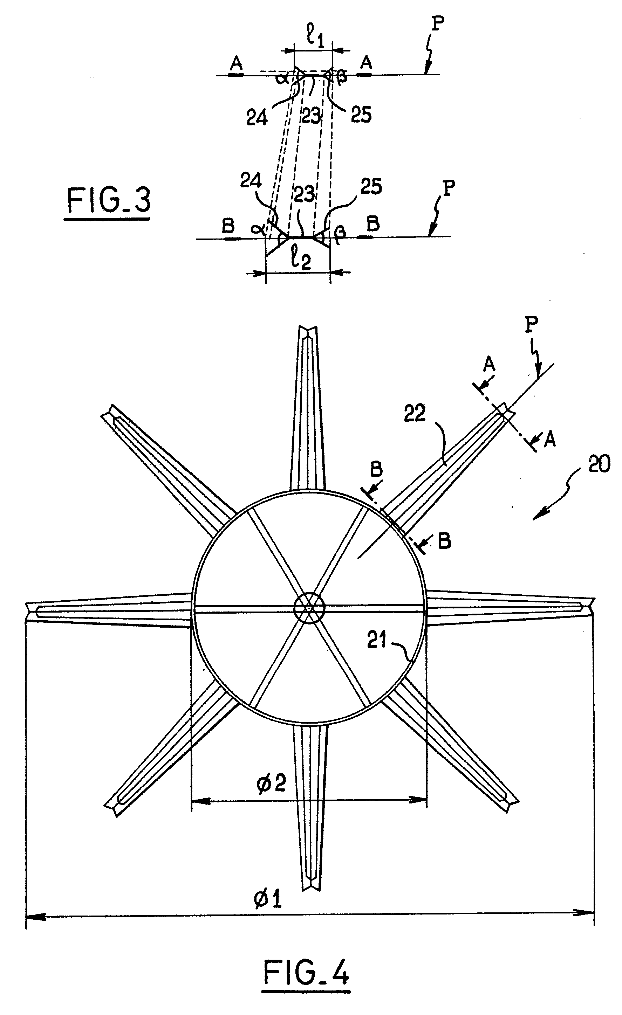

Le profil en section droite des aubes, tel qu'illustré figure 3, est symétrique par rapport au plan P qui est le plan central de l'aube passant par l'axe de la turbine (c'est à dire le plan de la feuille sur la figure 2), l'âme centrale 23 étant située dans le plan P. Cette symétrie permet d'utiliser indifféremment l'un ou l'autre sens de rotation des turbines, avec le même effet centrifuge ; en effet, pour compenser les légères différences locales de température qui pourraient exister, notamment en raison de différences de qualité des oeufs à couver incubés dans l'appareil, on choisit d'inverser plusieurs fois par jour le sens de rotation des turbines.

Le V intérieur 24 de la turbine présente un angle d'ouverture α supérieur à l'angle d'ouverture β du V extérieur 25. Cette dissymétrie permet d'accentuer l'effet de dépression existant entre les deux turbines.

Par ailleurs, les aubes présentent une légère inclinaison γ par rapport à la verticale, de manière à ne pas heurter perpendiculairement les parois de l'enceinte 1 (figure 1), mais au contraire afin de projeter l'air refoulé vers l'extérieur dans le sens de la circulation du flux de ventilation.

De la sorte, la masse des oeufs à couver, regroupée au centre de l'incubateur, est d'abord enveloppée par l'effet centrifuge. L'air est ensuite aspiré en retour à travers les oeufs à couver par l'effet de dépression provoqué d'une part directement par la forme des aubes, et d'autre part par le pompage effectué au niveau de la virole centrale pour compenser la dépression créée par l'effet centrifuge entre les deux turbines.

Outre sa fonction de circulation du flux d'air, le groupe de ventilation de la présente invention permet d'assurer la climatisation de l'enceinte, les différents paramètres de cette climatisation étant contrôlés, conformément à l'invention, à partir d'une chambre de climatisation centrale 11 située dans l'intervalle existant entre les deux viroles 21 en vis à vis des deux turbines.

A cet effet, il est prévu pour le réchauffage éventuel de l'air des résistances annulaires 30 permettant d'augmenter la température de l'air aspiré à l'intérieur des viroles.

Une partie de l'air recyclé est admise en partie inférieure d'une gaine verticale 40 qui débouche à son extrémité supérieure dans la chambre de climatisation 11. La chambre de climatisation d'air est pourvue de moyens de refroidissement 41, par exemple un serpentin dans lequel circule un fluide de refroidissement, l'humidification étant réalisé par exemple par pulvérisation ultrasonique au moyen d'une buse 42 placée dans la gaine 40 à proximité de l'endroit où l'air est récupéré dans le bas de l'incubateur.

Le renouvellement de l'air est réalisé par une gaine 50 amenant dans la chambre de climatisation 11, au centre du groupe de ventilation, de l'air pris à l'extérieur et éventuellement refroidi par des moyens de refrigération 51, du même type que les moyens 41.

Dans un mode de réalisation de la présente invention, les différents éléments présentent les dimensions suivantes :
- diamètre hors tout $\emptyset_1$ de la turbine : 1,6 à 2 m,
- diamètre $\emptyset_2$ de la virole centrale creuse : 0,6 à 0,9 m,
- largeur L de cette virole : 0,23 à 0,30 m,
- intervalle e entre les deux turbines : 0,3 à 0,5 m,
- inclinaison γ de la pale sur la verticale : 12 à 18°,
- angle α d'ouverture du V intérieur : 30 à 50°,
- angle β d'ouverture du V extérieur : 25 à 35°,
- largeur $l_2$ des aubes à la base : 0,18 à 0,22 m,
- largeur $l_1$ des aubes à l'extrémité : 0,10 à 0,15 m.

**Revendications**

1. Un groupe de ventilation (10) pour une enceinte (1) d'incubation d'oeufs ou une enceinte d'éclosoir, dans lequel un ventilateur centrifuge crée, par effet de dépression, un flux d'air dans des casiers de stockage d'oeufs disposés à proximité du ventilateur, caractérisé en ce que le ventilateur centrifuge comprend deux turbines (20) montées sur un axe horizontal et disposées sensiblement au centre de l'enceinte, avec les casiers (2) placés de part et d'autre des turbines, chacune des turbines étant constituée d'une virole creuse centrale (21) garnie d'aubes (22) à sa périphérie.

2. Le groupe de ventilation de la revendication 1, dans lequel l'air frais et l'air recyclé sont climatisés par humidification, réchauffage ou refroidissement éventuels, dans la zone centrale (11) comprise entre les viroles centrales distantes des deux turbines, avant tout contact avec la masse des oeufs à couver.

3. Le groupe de ventilation de l'une des revendications 1 et 2, dans lequel les aubes ont, en section droite, un forme présentant une âme centrale (23) pourvue d'extrémités (24,25) en forme de V.

4. Le groupe de ventilation de la revendication 3, dans lequel la forme de la section droite des aubes est une forme symétrique de part et d'autre du plan central de l'aube (P) passant par l'axe de la turbine, de manière à autoriser un fonctionnement dans les deux sens de cette dernière.

5. Le groupe de ventilation de la revendication 3, dans lequel le V de l'extrémité intérieure (24) est de plus grande dimension que celle du V de l'extrémité extérieure (25).

6. Le groupe de ventilation de la revendication 3, dans lequel le V de l'extrémité intérieure (24) présente un angle d'ouverture (α) supérieur à celui (β) du V de l'extrémité extérieure (25).

7. Le groupe de ventilation de la revendication 3, dans lequel les aubes présentent une inclinaison (γ) par rapport à la direction radiale.

8. Le groupe de ventilation de la revendication 7, dans lequel l'inclinaison ($\gamma$) des aubes par rapport à la direction radiale est comprise entre 10 et 20°.

9. Le groupe de ventilation de la revendication 1, dans lequel le diamètre ($\varnothing 2$) de la virole centrale est compris entre 25 et 60 % du diamètre hors tout ($\varnothing 1$) de la turbine.

10. Le groupe de ventilation de la revendication 1, dans lequel la largeur (L) en direction axiale de la virole centrale est comprise entre 25 et 60 % du diamètre ($\varnothing 2$) de celle-ci.

11. Le groupe de ventilation de la revendication 1, dans lequel l'écartement (e) en direction axiale entre les deux turbines est compris entre 10 et 30 % du diamètre hors tout ($\varnothing 1$) de celles-ci.

FIG_1

FIG_2

FIG.3

FIG.4

Office européen
des brevets

**RAPPORT DE RECHERCHE EUROPEENNE**

Numero de la demande

EP  88 40 2685

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2450056 (LEMONNIER) <br> * le document en entier * <br> --- | 1 | A01K41/00 |
| Y | FR-A-1204008 (WORMGOOR) <br> * page 2; figures 1, 2 * | 1 | |
| A | | 9 | |
| A | --- <br> US-A-2439145 (PORTER) <br> ----- | | |

| | DOMAINES TECHNIQUES RECHERCHES (Int. Cl.4) |
|---|---|
| | A01K <br> F04D |

Le présent rapport a été établi pour toutes les revendications

| Lieu de la recherche | Date d'achèvement de la recherche | Examinateur |
|---|---|---|
| LA HAYE | 7 FEVRIER 1989 | VON ARX V.U. |